# EUROPEAN PATENT APPLICATION

(11) **EP 4 723 544 A1**
(43) Date of publication of application: **08.04.2026**
(21) Application number: 25195694.2
(22) Date of filing: 13.08.2025
(51) Int. Cl.: H04L 9/08, G06N 3/02

(54) **PRIVATE FUNCTION EVALUATION USING MACHINE LEARNING**

(30) Priority: 04.10.2024 US 202418907046
(71) Applicant: SAP SE, 69190 Walldorf (DE)
(72) Inventor: BOEHLER, Jonas, 69190 Walldorf (DE)
(74) Representative: Müller-Boré & Partner Patentanwälte PartG mbB

(57) **Abstract**

The present disclosure involves systems, software, and computer implemented methods for private function evaluation. One example method includes identifying a function provided by a function-providing entity. A neural network is trained to approximate the function. A shallow neural network is generated from the neural network. The shallow neural network approximates the function and includes shallow network parameters. The shallow network parameters are secret shared to a first set of entities. A request is received to execute the function using at least one input parameter. The input parameters are secret to the first set of entities. Secret-shared function outputs are received that are generated by the first set of entities using a set of secret-shared input parameters and the shallow neural network with secret-shared shallow network parameters. A function output is generated for the function using the secret-shared function outputs.

## Description

### TECHNICAL FIELD

The present disclosure relates to computer-implemented methods, software, and systems for private function evaluation.

### BACKGROUND

A neural network can be represented as directed graphs with weights along graph edges and activation functions as graph nodes. In a first layer, an input can be multiplied by respective weights. The results of the multiplication can be added together and fed into the node of the first layer to apply an activation function on the aggregated results. The output of the activation function of a given layer can be the input to a next layer, where a same procedure as performed for the first layer can be applied to the next layer (e.g., an activation function for the node can be computed over a weighted sum from the incoming edges of the node).

Secret sharing can enable multiple parties to split a secret value into multiple shares, one for each party, such that a certain minimum number of shares is required to reconstruct the secret value. Secret sharing can allow the parties to perform computations on the shares without revealing the secret value to the parties. Secret sharing can enable secure addition and secure multiplication, for example. By using secure addition and secure multiplication as building blocks, the parties can use those building blocks to securely perform any computation (e.g., secure comparison and other types of computations).

### SUMMARY

The present disclosure involves systems, software, and computer implemented methods for private function evaluation. An example method includes: identifying a function provided by a function-providing entity; training a neural network to approximate the function; generating a shallow neural network from the neural network, wherein the shallow neural network approximates the function and includes shallow network parameters; secret sharing the shallow network parameters to a first set of entities; receiving a request to execute the function using at least one input parameter; secret sharing the at least one input parameter to the first set of entities; receiving secret-shared function outputs generated by the first set of entities using a set of secret-shared input parameters and the shallow neural network with secret-shared shallow network parameters; generating a function output for the function using the secret-shared function outputs; and providing the function output in response to the request to execute the function.

Implementations may include one or more of the following features. The neural network can be trained to approximate the function until a threshold precision is reached for an input domain of the function. The shallow neural network may have less than a threshold number of layers. The shallow neural network may have wider layers than the neural network. The shallow network parameters can be secret shared using replicated secret sharing. The first set of entities might not include the function-providing entity. The at least one input parameter can be secret shared using replicated secret sharing.

While generally described as computer-implemented software embodied on tangible media that processes and transforms the respective data, some or all of the aspects may be computer-implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 is a block diagram illustrating an example system for private function evaluation.
FIG. 2 illustrates an example system for private function evaluation.
FIG. 3 is a flowchart of an example method for private function evaluation.

### DETAILED DESCRIPTION

Private function evaluation (PFE) can be useful in certain situations or environments. With PFE, a first party A knows a private function *f* and a second party B has sensitive inputs *x.* With PFE, a computation of *y = f*(*x*) can be performed while only learning the result *y*, without the party A learning the input *x* of party B or party B learning the function *f* of party A.

As an example, the function *f* can be a proprietary model (e.g., to calculate health risk). The inputs *x* can be or include personal information (e.g., health information). In this example, the function *f* and the inputs *x* cannot be easily shared without revealing proprietary secrets or sensitive personal information. For this example, PFE can be used to be able to learn *y = f*(*x*) while protecting both the function *f* and the inputs *x.*

An improved PFE approach can be used for efficient and secure computation that hides both function details and function inputs. The improved PFE approach can use a combination of machine learning and secure computation techniques to construct encrypted, topology-hiding neural networks for private function evaluations. To hide inputs *x*, the inputs *x* can be encrypted via secret sharing. Hiding the function *f* can include expressing the function *f* as a shallow (but wide) neural network and secret sharing the weights of the shallow neural network. With the improved PFE approach, to evaluate the function *y = f*(*x*), secure computation can be performed on the secret shares to learn only the output *y*.

The shallow network can be topology hiding. For instance, the structure of the shallow neural network, unlike approaches that may use other types of neural networks to approximate functions, does not reveal a structure or topology of the computation. Non-shallow neural networks which may be used in other approaches can reveal topology details, for example. Other approaches may only achieve partial function privatization, for example. The improved PFE approach can also provide efficiency benefits as compared to other PFE approaches due to avoidance of inefficient padding and by using, for example, replicated secret sharing to reduce message passing between parties. Replicated secret sharing is especially suited to compute weighted sums, thus improving efficiency. Replicated secret sharing allows for computing weighted sums per network layer in parallel. Reducing the number of layers by generating shallow networks further improves efficiency.

The improved PFE approach enables private computations to run in an outsourced fashion (e.g., in a cloud computing model) without revealing details of the actual computation or sensitive inputs. The improved PFE therefore provides both model privacy and input privacy, thereby protecting, for example, proprietary models and sensitive inputs from being revealed to any single party.

The improved PFE approach can be used for the following example use cases: 1) risk calculation and scoring while hiding a model and protecting personal information; 2) rate calculation while hiding a model (e.g., for health-based or car insurance) and protecting private information (e.g., health records or typical usage data from car sensors); 3) intellectual property protection; and 4) other use cases. In general, the improved PFE approach can provide benefits of model privacy and input privacy for models where satisfactory precision to a certain number of digits is acceptable.

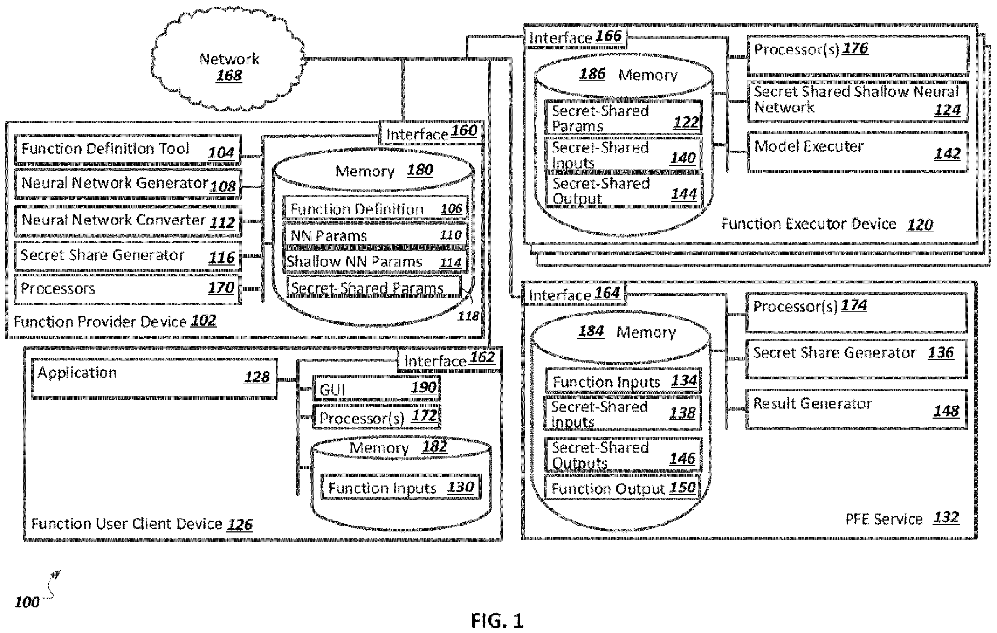

FIG. 1 is a block diagram illustrating an example system 100 for private function evaluation. Although shown separately, in some implementations, functionality of two or more systems or servers may be provided by a single system or server. In some implementations, the functionality of one illustrated system, server, or component may be provided by multiple systems, servers, or components, respectively.

An entity may wish to offer a function without revealing details of the structure of the function, as described above. A function provider device 102 can include a function definition tool 104 that enables a function-providing entity to define a function (e.g., a function implementation, function input(s), and a function output type). A function defined using the function definition tool 104 can be represented as a function definition 106.

The function-providing entity can use a neural network generator 108 to convert the function (e.g., the function definition 106) to a neural network (e.g., where the neural network can have neural network parameters 110 (e.g., weights and possibly other information) that define the neural network). The neural network generator 108 can, for example, build a neural network that has a ReLU (Rectified Linear Unit) activation function for the function. The neural network generator 108 can train the neural network to approximate the function until sufficient precision is reached on an input domain of the function.

The function-providing entity can use a neural network converter 112 to convert the neural network into an equivalent shallow neural network (e.g., where the shallow neural network can have shallow neural network parameters 114 - specifically, fewer layers but potentially more nodes per layer - that define the shallow neural network). The neural network converter 112 can be configured with an algorithm that can determine the shallow neural network parameters 114 for a shallow neural network of a preconfigured shallow structure (e.g., three hidden layers) that is an identical shallow structure regardless of which function an input neural network represents. The shallow neural network (defined by the shallow neural network parameters 114) reflects a horizontal rearranging of the same functionality of the input neural network.

Although shown as being included in the function provider device 102 of the function-providing entity, in some implementations, the function-providing entity can use other trusted services or systems to generate the neural network and to convert the neural network to the shallow neural network.

The function-providing entity may wish to outsource function execution operations to one or more other parties, such as cloud service providers, without revealing details of the function itself. To accomplish function privacy for the function, the function-providing entity can secret share the shallow neural network model with different cloud service providers. For example, a secret share generator 116 can generate secret-shared parameters 118 that are secret shares of the shallow neural network parameters 114. The function-providing entity can share the secret-shared parameters 118 to different cloud providers, where each cloud provider is represented in the system 100 as a function executor device 120. Each function executor device 120 can receive secret-shared parameters 122 (e.g., as a copy of the secret-shared parameters 118). Each function executor device 120 can have or have access to a secret shared shallow neural network 124 that is configured using the secret-shared parameters 122.

For private function evaluation, a function user may desire to execute the function using a set of inputs. As one example, a function user client device 126 can have an application 128 that enables a function user to request execution of the function using a set of function inputs 130. The function-providing entity may wish to offer input privacy to users of the function offered by the function-providing entity. As such, the function-providing entity is not provided the function inputs 130. Rather, the function user client device 126 can send the function inputs 130 with a request to execute the function to a trusted service (e.g., represented in the system 100 as a PFE service 132). The PFE service 132 receives the function inputs 130 as function inputs 134.

A secret share generator 136 of the PFE service 132 can generate secret shared inputs 138 from the function inputs 134 and share the secret shared inputs 138 with each function executor device 120. Accordingly, each function executor device 120 can have secret shared inputs 140. As another example, instead of the PFE service 132 acting as a trusted dealer, each input party (e.g., party that holds at least one the function inputs 130) can generate the shares themselves and distribute the shares to the computing parties (e.g., parties performing the computation on secret-shared data).

Each function executor device 120 can use a model executer 142 to evaluate the secret shared inputs 140 on an instance of the secret shared shallow neural network 124 to generate a respective secret shared output 144. Each function executor device 120 can share the secret shared output 144 with the PFE service 132, resulting in the PFE service 132 having secret shared outputs 146. A result generator 148 can generator a function output 150 from the secret shared outputs 146 (e.g., by reconstructing the function output 150 from the respective secret shared outputs 146). The PFE service 132 can provide the function output 150 to the function user client device 126 (e.g., for presentation in or other use by the application 128).

Various functionalities may occur other than as illustrated in FIG. 1. For example, function execution requesters may be server-based requesters (e.g., rather than a requester directly associated with a user device). Additionally, some functionality illustrated as being performed in or by the PFE service 132 may be performed by the function provider device 102. For instance, secret shared outputs may be shared with the function provider device 102 and a result generator included in the function provider device 102 may reconstruct a function output based on respective shares.

As used in the present disclosure, the term "computer" is intended to encompass any suitable processing device. For example, although FIG. 1 illustrates a single function provider device 102, a single function user client device 126, and a single PFE service 132, the system 100 can be implemented using multiple of such devices. The function provider device 102, the function user client device 126, the PFE service 132, and each function executor device 120 may be any computer or processing device such as, for example, a blade server, general-purpose personal computer (PC), Mac^{®}, workstation, UNIX-based workstation, or any other suitable device. In other words, the present disclosure contemplates computers other than general purpose computers, as well as computers without conventional operating systems. Further, each illustrated device may be adapted to execute any operating system, including Linux, UNIX, Windows, Mac OS^{®}, Java^{™}, Android^{™}, iOS or any other suitable operating system.

Interfaces 160, 162, 164, and 166 are used by the function provider device 102, the function user client device 126, the PFE service 132, and the function executor device 120, respectively, for communicating with other systems in a distributed environment - including within the system 100 - connected to a network 168. Generally, the interfaces 160, 162, 164, and 166 each comprise logic encoded in software and/or hardware in a suitable combination and operable to communicate with the network 168. More specifically, the interfaces 160, 162, 164, and 166 may each comprise software supporting one or more communication protocols associated with communications such that the network 168 or interface's hardware is operable to communicate physical signals within and outside of the illustrated system 100.

The function provider device 102, the function user client device 126, the PFE service 132, and the function executor device 120 each include one or more processors 170, 172, 174, or 176, respectively. Each processor in the processors 170, 172, 174, or 176 may be a central processing unit (CPU), a blade, an application specific integrated circuit (ASIC), a field-programmable gate array (FPGA), or another suitable component. Generally, each processor in the processors 170, 172, 174, or 176 executes instructions and manipulates data to perform the operations of the respective device.

Regardless of the particular implementation, "software" may include computer-readable instructions, firmware, wired and/or programmed hardware, or any combination thereof on a tangible medium (transitory or non-transitory, as appropriate) operable when executed to perform at least the processes and operations described herein. Indeed, each software component may be fully or partially written or described in any appropriate computer language including C, C++, Java^{™}, JavaScript^{®}, Visual Basic, assembler, Perl^{®}, Python, any suitable version of 4GL, as well as others. While portions of the software illustrated in FIG. 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components as appropriate.

The function provider device 102, the function user client device 126, the PFE service 132, and the function executor device 120 each include memory 180, 182, 184, or 186, respectively. In some implementations, a given device can include multiple memories. Each memory 180, 182, 184, or 186 may include any type of memory or database module and may take the form of volatile and/or non-volatile memory including, without limitation, magnetic media, optical media, random access memory (RAM), read-only memory (ROM), removable media, or any other suitable local or remote memory component. Each memory 180, 182, 184, or 186 may store various objects or data, including caches, classes, frameworks, applications, backup data, business objects, jobs, web pages, web page templates, database tables, database queries, repositories storing business and/or dynamic information, and any other appropriate information including any parameters, variables, algorithms, instructions, rules, constraints, or references thereto associated with the purposes of the respective device.

The function user client device 126 may generally be any computing device operable to connect to or communicate with the PFE service 132 via the network 168 using a wireline or wireless connection. In general, the function user client device 126 comprises an electronic computer device operable to receive, transmit, process, and store any appropriate data associated with the system 100 of FIG. 1. The function user client device 126 can include one or more client applications, including the application 128. A client application is any type of application that allows the function user client device 126 to request and view content on the function user client device 126. In some implementations, a client application can use parameters, metadata, and other information received at launch to access a particular set of data from the PFE service 132. In some instances, a client application may be an agent or client-side version of the one or more enterprise applications running on an enterprise server (not shown).

The function user client device 126 is generally intended to encompass any client computing device such as a laptop/notebook computer, wireless data port, smart phone, personal data assistant (PDA), tablet computing device, one or more processors within these devices, or any other suitable processing device. For example, the function user client device 126 may comprise a computer that includes an input device, such as a keypad, touch screen, or other device that can accept user information, and an output device that conveys information associated with the operation of the system 100, or the function user client device 126 itself, including digital data, visual information, or a GUI (Graphical User Interface) 190.

The GUI 190 of the function user client device 126 interfaces with at least a portion of the system 100 for any suitable purpose, including generating a visual representation of the application 128. In particular, the GUI 190 may be used to view and navigate various Web pages, or other user interfaces. Generally, the GUI 190 provides the user with an efficient and user-friendly presentation of business data provided by or communicated within the system. The GUI 190 may comprise a plurality of customizable frames or views having interactive fields, pull-down lists, and buttons operated by the user. The GUI 190 contemplates any suitable graphical user interface, such as a combination of a generic web browser, intelligent engine, and command line interface (CLI) that processes information and efficiently presents the results to the user visually.

There may be any number of function user client devices 126 associated with, or external to, the system 100. For example, while the illustrated system 100 includes one function user client device 126, alternative implementations of the system 100 may include multiple function user client devices 126 communicably coupled to the PFE service 132 and/or the network 168, or any other number suitable to the purposes of the system 100. Additionally, there may also be one or more additional function user client devices 126 external to the illustrated portion of system 100 that are capable of interacting with the system 100 via the network 168. Further, the term "client", "client device" and "user" may be used interchangeably as appropriate without departing from the scope of this disclosure. Moreover, while the function user client device 126 is described in terms of being used by a single user, this disclosure contemplates that many users may use one computer, or that one user may use multiple computers.

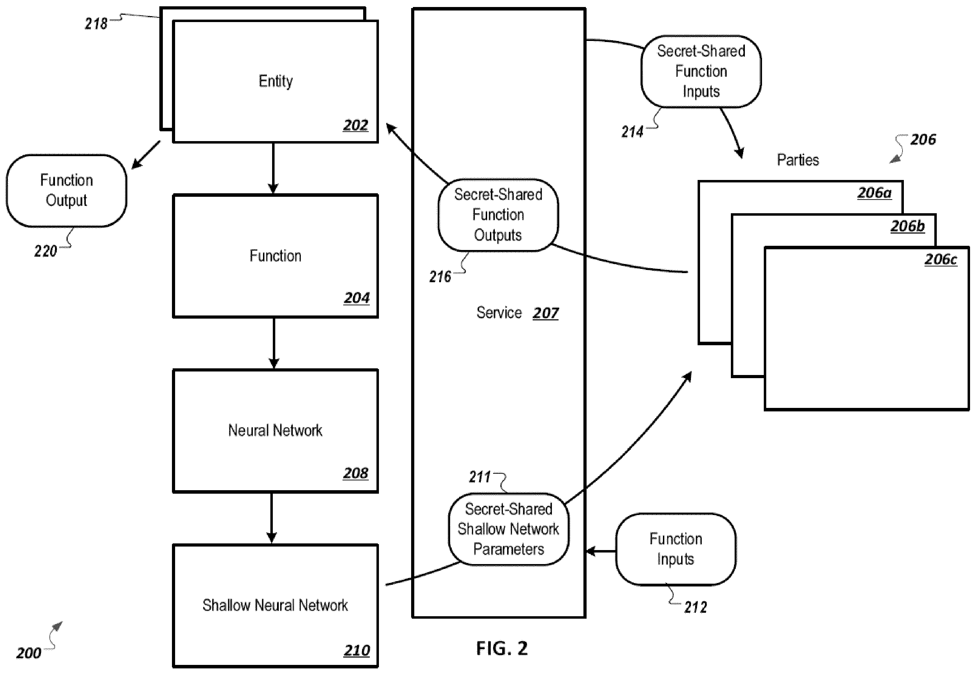

FIG. 2 illustrates an example system 200 for private function evaluation. An entity 202 can develop a function 204. The function 204 can be a proprietary function, for example. The entity 202 may wish to outsource execution of the function 204 to one or more other parties 206 (e.g., cloud computing entities) without revealing details of the internals of the function 204.

The entity 202 (or another service 207 trusted by the entity 202) can train a neural network 208 to approximate the function 204. The entity 202 (or the service 207) can create a shallow neural network 210 from the neural network 208. As described above, the shallow neural network 210 is a topology-hiding network that does not reveal any structural or topological details of the function 204. The entity 202 (or the service 207) can send secret-shared shallow neural network parameters 211 (e.g., weights) with the parties 206 that are to perform execution of the function 204 in a function-privatized manner for the entity 202.

The service 207 (or another entity or service) can receive a request to execute the function 204 using a set of function inputs 212. The service 207 can secret-share the function inputs 212 as secret-shared function inputs 214 to the parties 206. The parties 206 can each compute secret-shared function outputs 216 by executing an instance of the shallow neural network 210 using the secret-shared shallow neural network parameters 211 and the secret-shared function inputs 214. The secret-shared function outputs 216 can be provided to the entity 202, the service 207, and/or another entity 218. A receiver of the secret-shared function outputs 216 can generate (e.g., reconstruct) a function output 220 from the secret-shared function outputs 216.

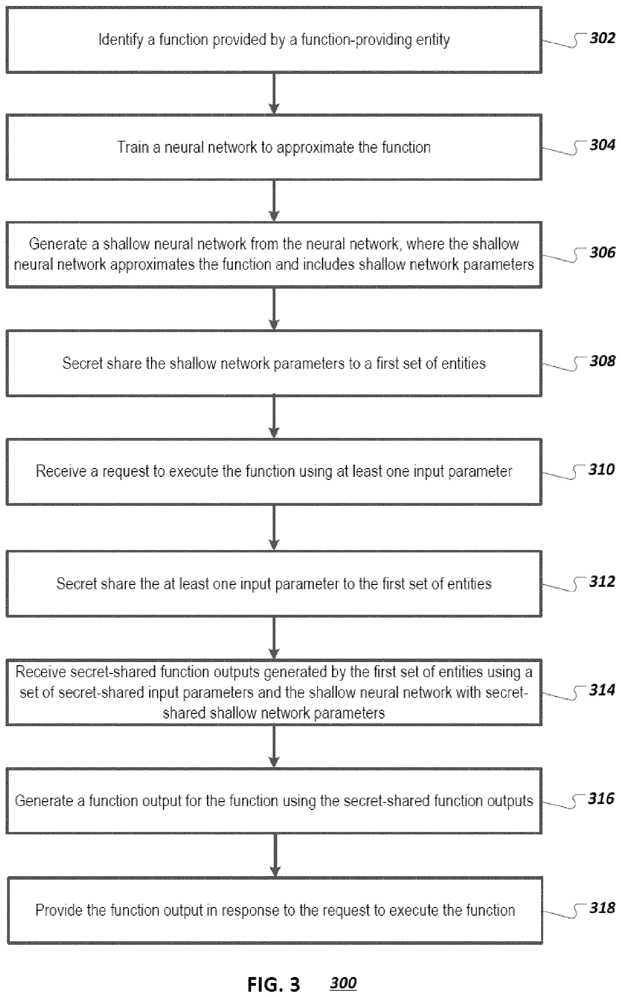

FIG. 3 is a flowchart of an example method for private function evaluation. It will be understood that method 300 and related methods may be performed, for example, by any suitable system, environment, software, and hardware, or a combination of systems, environments, software, and hardware, as appropriate. For example, one or more of a client, a server, or other computing device can be used to execute method 300 and related methods and obtain any data from the memory of a client, the server, or the other computing device. In some implementations, the method 300 and related methods are executed by one or more components of the system 100 described above with respect to FIG. 1. For example, the method 300 and related methods can be executed by the function provider device 102 and/or the PFE service 132 of FIG. 1.

At 302, a function provided by a function-providing entity is identified.

At 304, a neural network is trained to approximate the function. The neural network can be trained, for example, to approximate the function until a threshold precision is reached for an input domain of the function.

At 306, a shallow neural network is generated from the neural network. The shallow neural network approximates the function and includes shallow network parameters (e.g., weights). The shallow neural network can have less than a threshold number of layers and can have wider layers than the neural network.

At 308, the shallow network parameters are secret shared to a first set of entities. The first set of entities can be a set of entities that either includes or does not include the function-providing entity. The shallow network parameters can be secret shared using replicated secret sharing.

At 310, a request is received to execute the function using at least one input parameter. The request can be received at the function-providing entity or at another entity.

At 312, the at least one input parameter is secret shared to the first set of entities. The at least one input parameter can be secret shared using replicated secret sharing.

At 314, secret-shared function outputs are received that are generated by the first set of entities using a set of secret-shared input parameters and the shallow neural network with secret-shared shallow network parameters.

At 316, a function output for the function is generated using the secret-shared function outputs.

At 318, the function output is provided in response to the request to execute the function.

The preceding figures and accompanying description illustrate example processes and computer-implementable techniques. But system 100 (or its software or other components) contemplates using, implementing, or executing any suitable technique for performing these and other tasks. It will be understood that these processes are for illustration purposes only and that the described or similar techniques may be performed at any appropriate time, including concurrently, individually, or in combination. In addition, many of the operations in these processes may take place simultaneously, concurrently, and/or in different orders than as shown. Moreover, system 100 may use processes with additional operations, fewer operations, and/or different operations, so long as the methods remain appropriate.

In other words, although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A computer-implemented method comprising:
identifying a function provided by a function-providing entity;
training a neural network to approximate the function;
generating a shallow neural network from the neural network, wherein the shallow neural network approximates the function and includes shallow network parameters;
secret sharing the shallow network parameters to a first set of entities;
receiving a request to execute the function using at least one input parameter;
secret sharing the at least one input parameter to the first set of entities;
receiving secret-shared function outputs generated by the first set of entities using a set of secret-shared input parameters and the shallow neural network with secret-shared shallow network parameters;
generating a function output for the function using the secret-shared function outputs; and
providing the function output in response to the request to execute the function.

2. The computer-implemented method of claim 1, wherein the neural network is trained to approximate the function until a threshold precision is reached for an input domain of the function.

3. The computer-implemented method of claim 1 or 2, wherein the shallow neural network has less than a threshold number of layers.

4. The computer-implemented method of any one of the preceding claims, wherein the shallow neural network has wider layers than the neural network.

5. The computer-implemented method of any one of the preceding claims, wherein the shallow network parameters are secret shared using replicated secret sharing.

6. The computer-implemented method of any one of the preceding claims, wherein the first set of entities does not include the function-providing entity.

7. The computer-implemented method of any one of the preceding claims, wherein the at least one input parameter is secret shared using replicated secret sharing.

8. A system, comprising:
a computing device; and
a computer-readable storage device coupled to the computing device and having instructions stored thereon which, when executed by the computing device, cause the computing device to perform operations according to a method of any one of claims 1 to 7.

9. A non-transitory computer-readable storage medium coupled to one or more processors and having instructions stored thereon which, when executed by the one or more processors, cause the one or more processors to perform operations according to a method of any one of claims 1 to 7.
